Europäisches Patentamt

(19) European Patent Office                    (11) Publication number:          0 147 069

Office européen des brevets                                                A2

(12)                    **EUROPEAN PATENT APPLICATION**

(21) Application number: 84308212.4            (51) Int. Cl.⁴: **B 62 D 3/12**
                                                        **B 62 D 5/06**
(22) Date of filing: 27.11.84

---

(30) Priority: 27.12.83 US 565335              (71) Applicant: **GENERAL MOTORS CORPORATION**
                                            **General Motors Building 3044 West Grand Boulevard**
                                            **Detroit Michigan 48202(US)**

(43) Date of publication of application:       (72) Inventor: **Collier, Kevin Joseph**
   **03.07.85 Bulletin 85/27**               **312 Coggins Road**
                                            **Pinconning, Michigan 48650(US)**

(84) Designated Contracting States:
   **DE FR GB IT**                          (74) Representative: **Breakwell, John Neil Bower et al,**
                                            **GM Patent Section Luton Office (F6) P.O. Box No. 3**
                                            **Kimpton Road**
                                            **Luton Beds. LU2 0SY(GB)**

(54) **Rack and pinion steering gear assembly.**

(57) A housing for a rack and pinion steering gear assembly is made by cold-drawing low carbon steel tubing into separate rack and pinion housing sections (5 and 3). The separate sections have windows (55 and 39) cut therein which are interfaced with one another and the sections are welded together at the periphery of the windows therein to connect the sections in a cross-wise relationship with one another allowing teeth of a pinion gear (23) mounted in the pinion gear section to mesh with rack teeth of a rack gear (49) mounted in the rack housing section.

A power cylinder (81) is integrally formed with the rack housing section and contains a power piston (99). Hydraulic lines (31 and 33) connecting the power cylinder to the pinion housing section are welded or brazed to the tubular steel rack and pinion housing sections.

Fig.1

## RACK AND PINION STEERING GEAR ASSEMBLY

This invention relates to a rack and pinion steering gear assembly as specified in the preamble of claim 1, for example as disclosed in US-A-3 951 045.

Rack and pinion steering gear assemblies have utilised housings made as one-piece castings of aluminium or other light-weight metal which are machine-finished to tight tolerances to accommodate the steering gear bearings and other components. Such castings are costly and are complex configurations, generally having a cylindrical pinion housing section crossed near one end by a cylindrical rack housing section. These castings also have special bosses or webs with openings therein to accommodate fasteners used to mount the steering gear to the vehicle. Bores formed in the casting intersect one another so that a pinion gear mounted in the pinion housing section can mesh with the teeth on an elongated rack slidably mounted within the rack housing section. Housings for power-assist rack and pinion steering gears have the bore in the pinion housing enlarged and machine-finished for a rotary valve assembly operatively mounted therein. Since such valve bores are subject to wear after extended use, steel sleeve inserts may be needed to extend the service life of the housing before overhaul is needed. However, such sleeves further add to the complexity and cost of steering gear housings.

In rack and pinion power steering gears, the rack housing section generally has a separable hydraulic power cylinder attached thereto. The rack extends from the rack housing section into the power cylinder, where it is attached to a piston separating the power cylinder into right and left-turn pressure chambers. These chambers are hydraulically connected to the rotary valve and a power steering pump by way of hydraulic lines connected into special threaded fittings mounted in the pinion housing section that houses the rotary valve and the power cylinder. These fittings add to the cost and complexity of these prior housings.

In view of the cost and complexities of the prior-art rack and pinion housings, there is a need for a new, improved and economical low-cost tubular steel steering gear housing, of simplified yet unique construction, which is applicable to power steering gears and has long service life and can be readily manufactured from available stock and equipment.

To this end a rack and pinion steering gear assembly in accordance with the present invention is characterised by the measures specified in the characterising portion of claim 1.

Steel conduits can be brazed or welded into integral connection with the power cylinder and the pinion housing, to obviate the need for special threaded fittings.

The present invention thus makes available a rack and pinion steering gear assembly utilising a new and improved discrete rack housing section of thin-walled tubular steel crossed and joined to a discrete pinion housing section of thin-walled tubular steel at interfacing open windows in the sections and welded together around the windows in a fluid-tight manner to provide internal cross bores to accommodate the rack and meshing pinion gear operatively mounted therein.

The present invention also makes available, if required, a rack and pinion steering gear assembly which utilises an all-steel housing as aforesaid for a rack and pinion power steering gear, and in which an integral extension of the rack housing provides a power cylinder connected and operated in response to a rotary valve mounted in an enlarged bore within the pinion section of the housing for power-assist steering of a vehicle.

The invention also provides a method of making a rack and pinion steering gear housing for a rack and pinion steering gear assembly, characterised by the steps specified in claim 4.

By the use of this method it is possible to achieve a new and improved method of making a rack and pinion steering gear of tubular steel in which a cylindrical thin-walled pinion gear housing is crossed and joined in a fluid-tight manner to a thin-walled tubular rack section at a matching window interface cut into the housings to allow a pinion to be rotatably mounted within one section to mesh with the teeth of a rack to be slidably mounted within the other section.

By the use of this new and improved method, a rack and pinion steering gear asembly can be made from a cylindrical thin-walled pinion gear housing section formed from low carbon steel tubing in which a window is cut, with this pinion gear housing section being then joined to a tubular rack section of thin-walled low carbon steel tubing by welding the two sections together at a matching window interface to allow a pinion adapted to be mounted in the pinion section to mesh with and linearly move a rack mounted in the rack section.

In the drawing:

Figure 1 is a front view of a rack and pinion steering gear assembly with parts broken away and in section;

Figure 2 is a fragmentary sectional view, with internal valve and gear parts shown in phantom lines, on the line 2-2 of Figure 1, in the direction of the arrows, to illustrate a housing for the steering gear assembly;

Figure 3 is a fragmentary sectional view, with parts broken away and in section, and with internal gear parts and rotary valve shown in phantom lines, on the line 3-3 of Figure 1, in the direction of the arrows;

Figure 4 is a fragmentary side view, generally on the line 4-4 of Figure 3, in the direction of the arrows, with a portion of the rack and pinion housing and the internal parts removed; and

Figures 5 and 6 are fragmentary sectional views taken respectively on the lines 5-5 and 6-6 of Figure 1, in the direction of the arrows, illustrating connection of hydraulic lines to the rack and pinion housing.

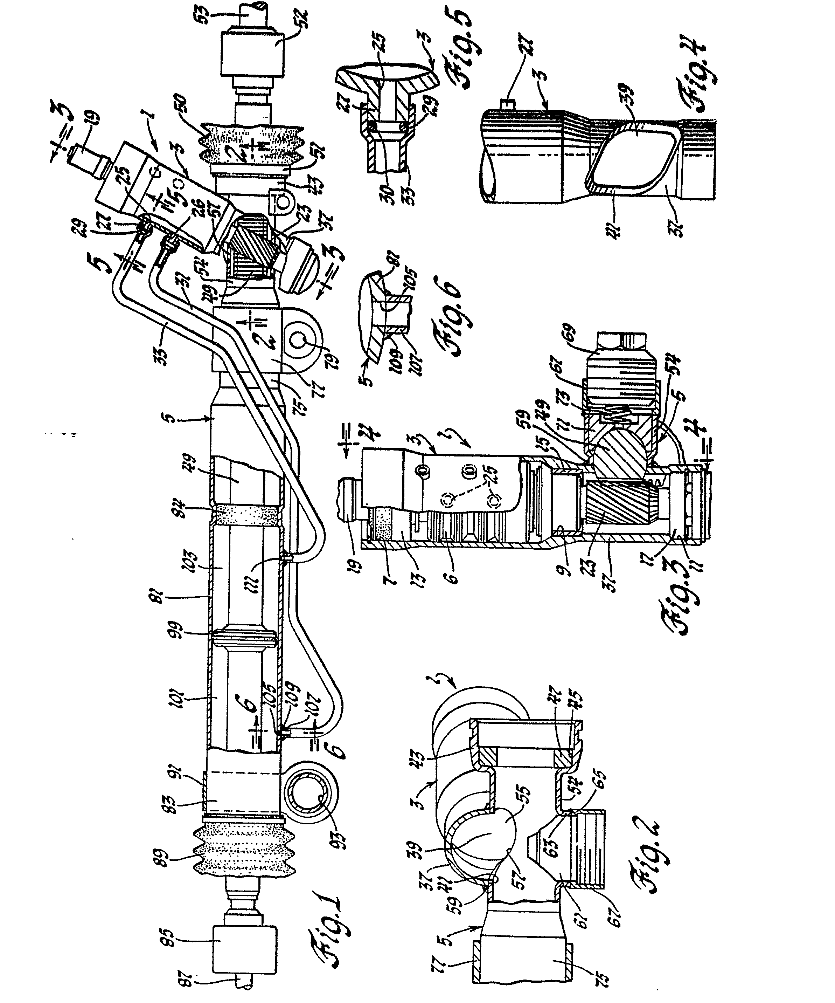

With reference now to the drawing, there is shown in Figure 1 a rack and pinion steering gear assembly 1 having an all-steel housing comprising a tubular pinion housing section 3 which crosses and is welded to a separate elongate tubular rack housing section 5. The pinion housing section 3 is cold-drawn from relatively thick-walled seamless tubing of low carbon steel into the thin-walled section best seen in Figures 1 to 3. The inner wall of this tubing is machine-finished for receiving a rotary valve 6 and to provide internal seats 7, 9 and 11 for bearings 13, 15 and 17 for a stub shaft 19. The rotary valve 6 and a pinion gear 23 operatively connected to the stub shaft 19 are similar to those described in GB-A-2 119 728.

The pinion housing section 3 has radial ports 25 and 26 extending through the wall thereof. These ports are encompassed by cylindrical upstanding metallic walls 27 formed when the ports are punched from the interior or the pinion housing section. The tops of the cylindrical walls 27 are ground or otherwise finished to present a flat surface 29. Braze rings 30 are mounted on the surfaces, and sufficient heat is applied to effect the brazed connection thereto of steel tubular conduits 31 and 33 which are further described below. The pinion housing section 3 has a reduced-diameter lower portion 37 in which there is cut a window 39 that is bounded by side walls 41 and is in the general configuration of a parallelogram.

In a similar manner to that described for the pinion housing section 3, the thin-walled tubular rack housing section 5 is made by cold-drawing one-piece low carbon steel tubing. The rack housing section 5 is formed with an enlarged-diameter end portion 43 that provides an internal seat 45 for an annular seal and bearing assembly 47 which receives an elongated cylindrical rack 49 slidably mounted therethrough. An elastomeric boot seal 50 is attached by means of a hose clamp 51 to the outer surface of the enlarged end portion of the rack housing section to block the entry of water, dirt or other foreign material from the end of the rack housing section and a U-joint 52 connecting a road wheel tie rod 53 to the end of the rack 49.

The rack housing section 5 has a reduced-diameter portion 54 formed with a window 55 bounded by a side wall 57 that interfaces with the window 39 of the pinion housing 3. At this juncture, the pinion housing section 3 is secured to the rack housing section 5 by means of a weld 59. This weld joins the wall of the pinion housing section 3 in a fluid-tight manner to the wall of the rack housing section 5 at the perimeter of the two interfaced windows 39 and 55. With this arrangement, the teeth of the pinion gear 23 mesh with the teeth of the rack 49 so that rotation of the pinion gear can move the rack in a linear path.

Diametrically opposed to the window 55 is an annular opening 61 formed in the rack housing section 5. An upstanding wall 63 around the opening 61 is formed from the wall material of the rack housing section 5 that terminates in an annular surface 65 flat-finished by grinding to provide a seat for an internally threaded sleeve 67 welded thereto. This sleeve threadedly receives an adjuster plug 69. Disposed between the inner end of the adjuster plug and the rack 49 is a rack bearing 71 and an adjuster spring 73. By advancing or retracting the adjuster plug 69, the meshing engagement of the teeth of the rack and pinion gears can be controlled, to thereby control the input torque required to turn the stub shaft 19 for a selected steering gear input.

The rack housing section 5 has an intermediate cylindrical section 75 which extends from the reduced-diameter portion 54 and to which a mounting bracket 77 is spot-welded. This bracket 77 has an opening 79 to receive a threaded fastener used to secure the steering gear assembly to the vehicle. The rack housing section 5 further has an integral power cylinder 81 internally machine-finished and extending laterally from the intermediate cylindrical section 75 to a terminal end 83 that has an end seal and bearing assembly, not shown, therein. The rack 49 slidably extends through an intermediate seal and bearing assembly 84 that is fixed in a stationary position in the power cylinder 81 and through the fixed end seal and bearing assembly and into engagement with a U-joint 85 of a tie rod assembly 87 operatively connected to a road wheel, not illustrated. A boot seal 89 is attached to the end 83 of the power cylinder 81 by a hose clamp to protect the end of the rack bearing housing and the universal joint 85 of the tie rod assembly 87. The power cylinder section of the rack housing has a mounting bracket 91 spot-welded thereto. This bracket 91 has an opening 93 for a threaded connector, not shown.

0147069

        The rack 49 has a piston 99 secured thereto
which is slidably mounted in the power cylinder to
provide right and left-turn pressure chambers 101 and
103 therein.  The right-turn chamber 101 has a passage
105 formed therein.  The steel conduit 31 has an end 107
which is secured in a fluid-tight manner to the power
cylinder around the passage 105 by a weld 109.  The
left-turn chamber 103 has a fluid passage 111 which is
hydraulically connected to the end of the steel conduit
33 in a similar manner.

        The pinion housing section 3 is shown fixed at
a selected acute angle with respect to the rack housing
section 5, but any angular relationship between these
sections can be selected to suit the user's
requirements.  For example, with straight-toothed rack
and pinion gearing, the windows 39 and 55 can be cut so
that they interfit at a $90^{\circ}$ angle and, when welded
together, the pinion and rack housing sections have a
fixed $90^{\circ}$ relationship.  The ability with this invention
to adjust the angularity of the rack and pinion housing
sections by changing the window cuts is advantageous
over conventional casting methods which require a change
in casting moulds.

        The hydraulic power assist operation of the
rack and pinion steering gear is like that of the prior
application mentioned above.  The hydraulic connection
of the rotary valve to the power steering pump, not
shown, is like that of the said prior application.  With
the rotary valve operating directly on the finished
steel wall of the pinion housing section, there is
minimized wear and increased service life of the
housing, to obviate any need for special wear sleeves.
The integral power cylinder provides an economical power
assist arrangement to eliminate separate fittings and
fasteners, and results in a sturdy power steering
housing unit.

Claims:

1. A rack and pinion steering gear assembly for controlling the dirigible wheels of a vehicle in which a tubular all-steel housing (3,5) contains a rotary pinion gear (23) adapted to be operatively connected to a vehicle steering wheel, and a linearly movable rack gear (49) adapted to be connected to the dirigible wheels is in meshing engagement with the pinion gear (23) so as to be linearly moved in response to rotary movement of the pinion gear (23), characterised in that the housing comprises a first thin-walled steel tube (3) forming a pinion housing section for the pinion gear (23), a second thin-walled steel tube (5) forming a rack housing section for the rack gear (49), access openings (39 and 55) provided in the first and second tubes (3 and 5), and fastener means (59) securing the tubes (3 and 5) to one another around the openings (39 and 55) in a permanent fluid-tight manner and at a predetermined angle and in interfacing relationship with one another so that the gears (23 and 49) mounted in the respective tubes (3 and 5) operatively intermesh with one another.

2. A rack and pinion steering gear assembly according to claim 1, characterized in that the rack housing section (5) has a hydraulic power cylinder (81) integral therewith and having a hydraulically powered piston (99) movably mounted therein and operatively connected to the rack (49), and that the pinion housing section (3) has a rotary power steering valve (6) movably mounted therein and operatively connected to the pinion gear (23) and hydraulically connected to the power cylinder (81) for controlling hydraulically powered movement of the piston (99) in the cylinder (81), and of the rack gear (49) connected thereto.

3. A rack and pinion steering gear assembly according to claim 1 or 2, characterised in that external hydraulic pressure fluid supply and exhaust lines (31 and 33) for the housing (3,5) are made of steel and welded to ports (105,111; 26,25) formed in the power cylinder (81) and in the pinion housing section (3) of the housing (3,5).

4. A method of making a rack and pinion steering gear housing for a rack and pinion steering gear assembly, characterised by the steps of cold-drawing a cylindrical thin-walled pinion gear housing (3) of low carbon steel, cold-drawing a thin-walled cylindrical rack housing (5) of low carbon steel, forming seats for bearings in the rack and pinion housings (5 and 3), cutting a window (39) through the wall of the pinion gear housing (3), cutting a window (55) through the wall of the rack housing (5), interfacing the windows (39 and 55) with one another while maintaining the pinion housing (3) and the rack housing (5) in a cross-wise relationship, and welding the two housing sections (3 and 5) together at the outer perimeter of the interfaced walls in a fluid-tight manner.

5. A method according to claim 4, characterised by forming a power cylinder (81) integrally with the rack housing (5).

6. A method according to claim 5, characterised in that external fluid-conducting lines (31 and 33) of tubular steel are welded directly to ports (105 and 111) formed in the power cylinder (81).

0147069

Fig.1 Fig.2 Fig.3 Fig.4 Fig.5 Fig.6